# EUROPEAN PATENT APPLICATION

(11) **EP 4 478 682 A1**
(43) Date of publication of application: **18.12.2024**
(21) Application number: 23769587.9
(22) Date of filing: 06.03.2023
(51) Int. Cl.: H04L 47/52, H04L 12/46

(54) **QUEUE SCHEDULING METHOD AND APPARATUS**

(30) Priority: 16.03.2022 CN 202210259483
(71) Applicant: Huawei Technologies Co., Ltd., Shenzhen, Guangdong 518129 (CN)
(72) Inventor: ZHANG, Zhou, Shenzhen, Guangdong 518129 (CN); ZHANG, Xiongwei, Shenzhen, Guangdong 518129 (CN)
(74) Representative: Goddar, Heinz J.
(86) International application number: PCT/CN2023/079729
(87) International publication number: WO 2023/174081

(57) **Abstract**

This application provides a queue scheduling method and apparatus, to flexibly adjust a total quantity of bytes of a packet that is dequeued in each time of scheduling, and improve QoS of a network system. The queue scheduling method includes: A queue scheduling apparatus determines first bandwidth, where the first bandwidth indicates a rate at which a packet on an outbound interface is dequeued. The queue scheduling apparatus determines a first scheduling parameter based on the first bandwidth and a first scheduling frequency, where the first scheduling frequency indicates a maximum quantity of scheduling times per unit of time, and the first scheduling parameter indicates a length of a packet scheduled each time. The queue scheduling apparatus schedules, based on the first scheduling parameter, to dequeue the packet on the outbound interface.

## Description

This application claims priority to Chinese Patent Application No. 202210259483.1, filed with the China National Intellectual Property Administration on March 16, 2022 and entitled "QUEUE SCHEDULING METHOD AND APPARATUS", which is incorporated herein by reference in its entirety.

### TECHNICAL FIELD

This application relates to the field of communication technologies, and in particular, to a queue scheduling method and apparatus.

### BACKGROUND

Quality of service (quality of service, QoS) is an indicator that reflects a network status, and the network status includes a network delay status, a network congestion status, and the like. A queue scheduling technology is a key technology to ensure network QoS, and is widely used. The queue scheduling technology is to add a packet received by a network device to a queue, and dequeue, according to a rule, a packet stored in the queue. The packet that is dequeued is sent from an outbound interface of the network device to a next-hop network device. An action of dequeuing the packet is referred to as one time of scheduling.

However, even if a queue scheduling function is configured for the network device, the network device may still send a large quantity of packets to the next-hop network device in a short period of time. Consequently, traffic burst occurs, and QoS of the next-hop network device is affected.

### SUMMARY

Embodiments of this application provide a queue scheduling method and apparatus, to flexibly adjust a total quantity of bytes of a packet that is dequeued in each time of scheduling, and improve QoS of a network system.

According to a first aspect, an embodiment of this application provides a queue scheduling method. The method may be applied to a queue scheduling apparatus. The queue scheduling apparatus may be a software module or a hardware module that is on a first device and that is configured to schedule to dequeue a packet on an outbound interface. The first device may be a network device such as a router, a switch, or the like, or may be another device configured to schedule the packet. The method includes the following steps. A queue scheduling apparatus determines first bandwidth. The first bandwidth indicates a rate at which a packet on an outbound interface is dequeued. Then, the queue scheduling apparatus may determine a first scheduling parameter based on the first bandwidth and a first scheduling frequency. The first scheduling frequency indicates a maximum scheduling parameter per unit of time, namely, a maximum quantity of times for which the queue scheduling apparatus can dequeue the packet per unit of time. The first scheduling parameter indicates a length of a packet scheduled each time, namely, a maximum length of the packet that can be dequeued by the queue scheduling apparatus in each time of scheduling. In this way, determining the first scheduling parameter based on the first bandwidth and the first scheduling frequency is equivalent to determining the first scheduling parameter based on an actual case that the queue scheduling apparatus forwards the packet (that is, the first bandwidth) and performance of the queue scheduling apparatus (that is, the first scheduling frequency). After the first scheduling parameter is determined, the packet on the outbound interface may be scheduled, based on the first scheduling parameter, to be dequeued. In this way, a scheduling parameter of the outbound interface can be flexibly adjusted based on actual bandwidth of the outbound interface. If the bandwidth of the outbound interface is reduced, the queue scheduling apparatus may decrease the scheduling parameter of the outbound interface, to reduce a total quantity of bytes of the packet sent to a corresponding next-hop network device in each time of scheduling, and avoid traffic burst on the next-hop network device. If the bandwidth of the outbound interface is increased, the queue scheduling apparatus may increase the scheduling parameter of the outbound interface, and the queue scheduling apparatus may dequeue more packets in each time of scheduling, to increase maximum bandwidth of the outbound interface. It can be learned that the scheduling parameter is flexibly adjusted based on the actual bandwidth of the outbound interface, so that the scheduling parameter of the outbound interface matches actual traffic of the outbound interface. Therefore, on a premise that normal transmission of the data flow is ensured, the total quantity of bytes of the packet that is dequeued in each time of scheduling is reduced, and QoS of a network can be better ensured.

In a possible design, before determining the first scheduling parameter, the queue scheduling apparatus may first determine that the first bandwidth matches second bandwidth. The second bandwidth is determined based on a second scheduling parameter and the first scheduling frequency. The second scheduling parameter is a total quantity of bytes of the packet that is dequeued by the queue scheduling apparatus at a first moment in each time of scheduling. The first moment is a moment at which the queue scheduling apparatus obtains the first bandwidth. In other words, the second bandwidth is determined based on a scheduling parameter used when the queue scheduling apparatus obtains the first bandwidth. If the second bandwidth matches the first bandwidth, it indicates that the scheduling parameter at the first moment does not meet a requirement of the first bandwidth, and the queue scheduling apparatus may determine a new scheduling parameter (namely, the first scheduling parameter) based on the first bandwidth and the first scheduling frequency.

In a possible design, that the first bandwidth matches the second bandwidth includes that the first bandwidth is less than the second bandwidth. If the first bandwidth is less than the second bandwidth, it indicates that actual bandwidth of the queue scheduling apparatus at the first moment is less than maximum bandwidth supported by the queue scheduling apparatus at the first moment. Therefore, the queue scheduling apparatus may reduce the scheduling parameter, to reduce a total quantity of bytes of the packet that is dequeued in each time of scheduling. Even if the first scheduling parameter is less than the second scheduling parameter, and the maximum bandwidth supported by the queue scheduling apparatus is reduced, normal scheduling of the packet is not affected because the first bandwidth is less than the second bandwidth.

In some possible designs, the queue scheduling apparatus may determine the first scheduling parameter based on a ratio of the first bandwidth to the first scheduling frequency. The ratio of the first bandwidth to the first scheduling frequency indicates to enable maximum bandwidth of the queue scheduling apparatus to be equal to a scheduling parameter of the first bandwidth. In this way, the first scheduling parameter that is determined based on the ratio of the first bandwidth to the first scheduling frequency matches the actual bandwidth of the outbound interface.

In a possible design, the queue scheduling apparatus may select, based on the ratio of the first bandwidth to the first scheduling frequency, the first scheduling parameter from a plurality of preset scheduling parameters. Specifically, the queue scheduling apparatus first determines a third scheduling parameter based on the ratio of the first bandwidth to the first scheduling frequency. The third scheduling parameter may be equal to the ratio of the first bandwidth to the first scheduling frequency, or may be equal to a sum of the ratio of the first bandwidth to the first scheduling frequency and a first preset value. Then, the queue scheduling apparatus selects, based on the third scheduling parameter, a first candidate scheduling parameter greater than or equal to the third scheduling parameter from a first candidate scheduling parameter set, and determines the first candidate scheduling parameter as the first scheduling parameter. For example, the queue scheduling apparatus may determine a smallest first candidate scheduling parameter that is greater than the third scheduling parameter and that is in the first candidate scheduling parameter set as the first scheduling parameter. The first candidate scheduling parameter set includes a plurality of first candidate scheduling parameters.

In a possible design, the first bandwidth is determined based on a length of the packet that is on the outbound interface and that is scheduled to be dequeued, or the first bandwidth is determined based on a length of a packet that is added to a first queue set. The first queue set is a set including a queue corresponding to the outbound interface. In other words, the first bandwidth may be dequeuing bandwidth of the outbound interface, or may be enqueuing bandwidth of the outbound interface.

In a possible design, that the first bandwidth matches the second bandwidth includes that the first bandwidth is greater than or equal to the second bandwidth. If the first bandwidth is not less than the second bandwidth, it indicates that bandwidth consumption of the outbound interface at the first moment is high, and the outbound interface does not have sufficient bandwidth to cope with possible traffic burst. Therefore, the queue scheduling apparatus may determine the first scheduling parameter based on the second scheduling parameter. The first scheduling parameter is greater than the second scheduling parameter. In this way, when the maximum quantity of times of scheduling that can be performed per unit of time remains unchanged, increasing the total quantity of bytes of the packet that is dequeued in each time of scheduling is equivalent to increasing the maximum bandwidth of the queue scheduling apparatus. This avoids congestion and packet loss caused by the traffic burst, and improves QoS of a network system.

In a possible design, the queue scheduling apparatus selects, based on the first bandwidth and the second scheduling parameter, the first scheduling parameter from a plurality of preset scheduling parameters. Specifically, the queue scheduling apparatus may select, from a second candidate scheduling parameter set, a second candidate scheduling parameter greater than the second scheduling parameter as the first scheduling parameter. The second candidate scheduling parameter set includes a plurality of second candidate scheduling parameters. The first scheduling parameter, for example, may be a smallest second candidate scheduling parameter that is greater than the second scheduling parameter and that is in the second candidate scheduling parameter set.

In a possible design, the queue scheduling apparatus determines, based on a sum of a second queue scheduling parameter and a preset value, the first scheduling parameter. The preset value may also be referred to as a preset step. In other words, the first scheduling parameter is equal to the sum of the second scheduling parameter and the preset step.

In a possible design, if the first bandwidth is the enqueuing bandwidth of the outbound interface, the first bandwidth may be greater than the first bandwidth, or may be greater than a product of the first scheduling frequency and the second scheduling parameter. Correspondingly, the queue scheduling apparatus may determine the first scheduling parameter based on the ratio of the first bandwidth to the first scheduling frequency. The ratio of the first bandwidth to the first scheduling frequency indicates to enable the maximum bandwidth of the queue scheduling apparatus to be equal to a scheduling parameter of the first bandwidth.

In a possible design, the queue scheduling apparatus determines, by comparing a value relationship between an actual frequency at which the packet is scheduled to be dequeued and the first scheduling frequency, that the first bandwidth matches the second bandwidth. Specifically, it is assumed that an actual quantity of scheduling times of the queue scheduling apparatus per unit of time is represented by a second scheduling frequency. In this case, the queue scheduling apparatus may compare a value relationship between the second scheduling frequency and a third scheduling frequency. If the second scheduling frequency is not less than the third scheduling frequency, it indicates that the first bandwidth is not less than the second bandwidth. The third scheduling frequency is determined based on the first scheduling frequency. For example, the third scheduling frequency may be equal to the first scheduling frequency, or may be equal to a product of the first scheduling frequency and a first preset proportion.

In a possible design, the first scheduling frequency is determined based on a crystal oscillator frequency or a clock frequency of the queue scheduling apparatus.

According to a second aspect, an embodiment of this application provides a queue scheduling apparatus. The apparatus includes an obtaining unit, configured to determine first bandwidth, where the first bandwidth indicates a rate at which a packet on an outbound interface is dequeued; and a processing unit, configured to: determine a first scheduling parameter based on the first bandwidth and a first scheduling frequency, where the first scheduling frequency indicates a maximum quantity of scheduling times per unit of time, and the first scheduling parameter indicates a length of a packet scheduled each time; and schedule, based on the first scheduling parameter, to dequeue the packet on the outbound interface.

In a possible design, the processing unit is specifically configured to determine that the first bandwidth matches second bandwidth. The second bandwidth is determined based on a second scheduling parameter and the first scheduling frequency, the second scheduling parameter is a length of a packet scheduled by the queue scheduling apparatus at a first moment each time, and the first moment is a moment at which the queue scheduling apparatus obtains the first bandwidth.

In a possible design, the processing unit is specifically configured to: in response to that the first bandwidth is less than the second bandwidth, determine the first scheduling parameter based on a ratio of the first bandwidth to the first scheduling frequency. The first scheduling parameter is less than the second scheduling parameter.

In a possible design, the processing unit is specifically configured to: determine a third scheduling parameter based on the ratio of the first bandwidth to the first scheduling frequency; and determine the first scheduling parameter from a first candidate scheduling parameter set based on the third scheduling parameter. The first candidate scheduling parameter set includes a plurality of first candidate scheduling parameters, and the first scheduling parameter is a first candidate scheduling parameter that is in the first candidate scheduling parameter set and that is not less than the third scheduling parameter.

In a possible design, the first bandwidth is determined based on a length of the packet that is on the outbound interface and that is scheduled to be dequeued, or the first bandwidth is determined based on a length of a packet that is added to a first queue set. The first queue set corresponds to the outbound interface.

In a possible design, the processing unit is specifically configured to: in response to that the first bandwidth is not less than the second bandwidth, determine the first scheduling parameter based on the second scheduling parameter. The first scheduling parameter is greater than the second scheduling parameter.

In a possible design, the processing unit is specifically configured to determine the first scheduling parameter from a second candidate scheduling parameter set based on the second scheduling parameter. The second candidate scheduling parameter set includes a plurality of second candidate scheduling parameters, and the first scheduling parameter is a second candidate scheduling parameter that is in the second candidate scheduling parameter set and that is not less than the second scheduling parameter.

In a possible design, the processing unit is specifically configured to determine the first scheduling parameter based on a sum of the third scheduling parameter and a preset step.

In a possible design, the first bandwidth is determined based on a length of a packet that is added to a first queue set. The first queue set corresponds to the outbound interface. The processing unit is specifically configured to: in response to that the first bandwidth is not less than the second bandwidth, determine the first scheduling parameter based on a ratio of the first bandwidth to the first scheduling frequency.

In a possible design, the processing unit is specifically configured to determine that a second scheduling frequency is not less than a third scheduling frequency. The second scheduling frequency indicates an actual quantity of scheduling times of the queue scheduling apparatus per unit of time, and the third scheduling frequency is determined based on the first scheduling frequency.

In a possible design, the first scheduling frequency is determined based on a crystal oscillator frequency or a clock frequency of the queue scheduling apparatus.

According to a third aspect, an embodiment of this application provides a device. The device includes a processor and a memory. The memory is configured to store instructions or program code, and the processor is configured to invoke the instructions or the program code from the memory and run the instructions or the program code, to perform the queue scheduling method according to the first aspect.

According to a fourth aspect, an embodiment of this application provides a chip, including a memory and a processor. The memory is configured to store instructions or program code, and the processor is configured to invoke the instructions or the program code from the memory and run the instructions or the program code, to perform the queue scheduling method according to the first aspect.

According to a fifth aspect of this application, an embodiment of this application provides a computer-readable storage medium, including instructions, a program, or code. When the instructions, the program, or the code is executed on a computer, the computer is enabled to perform the method according to the first aspect.

### BRIEF DESCRIPTION OF DRAWINGS

FIG. 1 is a schematic architectural diagram of a system 100 according to an embodiment of this application;
FIG. 2 is a schematic flowchart of a queue scheduling method according to an embodiment of this application;
FIG. 3 is a method flowchart of a queue scheduling method according to an embodiment of this application;
FIG. 4 is a schematic structural diagram of a queue scheduling apparatus 400 according to an embodiment of this application;
FIG. 5 is a schematic structural diagram of a device 500 according to an embodiment of this application; and
FIG. 6 is a schematic structural diagram of a device 600 according to an embodiment of this application.

### DESCRIPTION OF EMBODIMENTS

A queue scheduling technology can be used to relieve traffic burst and improve QoS of a network. If the traffic burst occurs, a network device receives a large quantity of packets in a short period of time. By using the queue scheduling technology, the network device stores the received packets in a queue and schedules the queue for many times. Each time the queue is scheduled, the network device dequeues one or more packets stored in the queue, and sends the packet that is dequeued to a next-hop network device. In this way, the traffic burst can be effectively relieved by using the queue scheduling technology.

However, a total quantity of bytes of the packet that can be dequeued by the network device in each time of scheduling is fixed. In this case, the total quantity of bytes of the packet that is dequeued in each time of scheduling cannot be flexibly adjusted. In this way, the network device may send a large quantity of packets to the next-hop network device in one time of scheduling. Consequently, traffic burst occurs on the next-hop network device, and QoS of the next-hop network device is affected.

Specifically, in the queue scheduling technology, the network device may perform scheduling for one or more times per unit of time. A product of a maximum quantity of times for which the network device performs scheduling per unit of time and the total quantity of bytes of the packet that is dequeued by the network device in each time of scheduling is equal to a total quantity of bytes of the packet that is dequeued by the network device per unit of time, that is, bandwidth of the network device. The total quantity of bytes of the packet that is dequeued by the network device in each time of scheduling is also referred to as a credit (Credit) granularity. A quantity of bytes of a packet may also be referred to as a length of the packet, and a total quantity of bytes of a plurality of packets is a sum of lengths of the plurality of packets.

However, with upgrading of the network system, the bandwidth of the network device is increasingly high. However, the maximum quantity of times for which the network device performs scheduling per unit of time depends on hardware configuration of the network device, and is difficult to be improved. Therefore, to increase the bandwidth of the network device, the total quantity of bytes of the packet that is dequeued by the network device in each time of scheduling is correspondingly increased. In other words, the network device dequeues a large quantity of packets in each time of scheduling and sends the packet to the next-hop network device. The next-hop network device receives the large quantity of packets in a short period of time. In this way, if a processing capability of the next-hop network device of the network device is limited, the packet that is dequeued in each time of scheduling may not be processed in time. Consequently, the traffic burst may occur on the next-hop network device, and the QoS of the next-hop network device is affected.

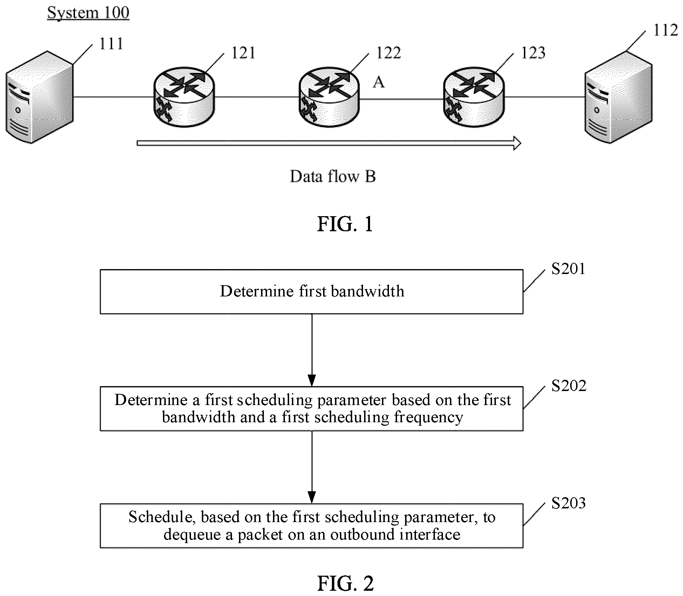

The following provides detailed descriptions with reference to FIG. 1. FIG. 1 is a schematic structural diagram of a system 100 according to an embodiment of this application. The system 100 includes a device 111, a device 112, a network device 121, a network device 122, and a network device 123. The network device 121 is separately connected to the device 111 and the network device 122, and the network device 123 is separately connected to the device 112 and the network device 122. The device 111 may send a data flow to the device 112 via the network device 121, the network device 122, and the network device 123. For ease of description, an outbound interface that is on the network device 122 and that is connected to the network device 123 is referred to as an outbound interface A, and a data flow sent by the device 111 to the device 112 is referred to as a data flow B. The data flow B includes a plurality of packets.

A queue scheduling function is configured on the network device 122. After receiving a data packet sent by the network device 121, the network device 122 first stores the packet in a queue. Then, the network device 121 dequeues, according to a rule, the packet stored in the queue. For example, the network device 121 may schedule, in a first in first out (First In First Out, FIFO) manner, to dequeue the packet buffered in the queue, and discard, based on a drop tail (drop tail) mechanism, a packet that cannot be stored. Alternatively, if the network device 122 is configured to transmit a plurality of data flows, the network device 122 may be provided with a plurality of queues, and different queues correspond to different data flows. The network device 122 may schedule, in a round robin scheduling manner or the like, to dequeue packets stored in different queues.

A total quantity of bytes of the packet that is on the network device 122 and that is dequeued in each time of scheduling is determined based on maximum bandwidth of the network device 122 and a maximum quantity of times of scheduling that can be performed per unit of time. A highest frequency at which the network device 122 schedules the packet depends on hardware configuration of the network device 122, for example, may be determined by a clock frequency or a crystal oscillator frequency of the network device 122. For example, the network device 122 may monitor an inversion status of a clock signal. Each time the clock signal passes through a periodicity, the network device 122 schedules the packet once. In this way, a frequency at which the network device 122 schedules the packet is equal to a frequency of the clock signal. Correspondingly, maximum rated bandwidth of the network device 122 is equal to a maximum quantity of times for which the network device 122 schedules to dequeue the packet per second and the total quantity of bytes of the packet that is dequeued by the network device 122 in each time of scheduling. Therefore, after the maximum rated bandwidth of the network device 122 is determined, the total quantity of bytes of the packet that is dequeued by the network device 122 in each time of scheduling is determined accordingly.

Currently, the total quantity of bytes of the packet that is dequeued by the network device 122 in each time of scheduling cannot be flexibly adjusted. If actual bandwidth of the network device 122 is less than the maximum rated bandwidth of the network device 122, the network device 122 may reduce a quantity of times for which the network device 122 schedules to dequeue the packet per second. To be specific, the actual bandwidth of the network device 122 is equal to a quantity of times for which the network device 122 actually schedules to dequeue the packet per second and the total quantity of bytes of the packet that is dequeued by the network device 122 in each time of scheduling.

It is assumed that the network device 122 sends a packet of a maximum of 200 mega bytes (Mega byte, MB) per second. In other words, the bandwidth of the network device 122 is 200 MB per second (MB per second, MB/s). If the network device 122 can perform scheduling for a maximum of 2 mega times per second, in other words, a frequency at which the network device 122 schedules to dequeue the packet is 2 MHz (Hertz, Hz), the total quantity of bytes of the packet that is dequeued in each time of scheduling is 200/2 = 100 bytes. In this way, after the maximum frequency (2 MHz) at which the network device 122 schedules the packet is reached, the bandwidth of the network device 122 reaches the maximum rated bandwidth 200 MB of the network device 122. If the actual bandwidth of the network device 122 is 100 MB/s, the frequency at which the network device 122 schedules to dequeue the packet is 100/100 = 1 MHz.

In the foregoing example, each time the network device 122 schedules the packet, a 100-byte packet is dequeued and sent to the network device 123. However, if a packet processing capability of the network device 123 is poor, or a resource of the network device 123 is occupied by another data flow, the network device 123 may fail to process the packet of the network device 122 in a short period of time. In this way, traffic burst occurs on the network device 123, and normal transmission of the data flow B is affected.

For example, if the network device 123 is further configured to transmit a packet of another network device, and a queue of the network device 123 stores a large quantity of packets, and has small free storage space. In this case, the network device 123 may fail to process the 100-byte packet sent by the network device 122 in time. Consequently, QoS of the network device 123 is affected. For example, it is assumed that the network device 123 still has remaining storage space of 60 bytes. After receiving the 100-byte packet sent by the network device 122, the network device 123 discards a 50-byte packet in the 100-byte packet. In this way, a packet loss ratio of the data flow B is increased. This affects the QoS.

To resolve the foregoing problem that the total quantity of bytes of the packet that is dequeued in each time of scheduling is excessively large, embodiments of this application provide a queue scheduling method and apparatus, to flexibly adjust a total quantity of bytes of a packet that is dequeued in each time of scheduling. Therefore, traffic burst on a next-hop network device is avoided, and QoS of a network system is improved.

The queue scheduling method provided in embodiments of this application may be applied to the system shown in FIG. 1. Specifically, execution may be performed by any one or more of the network device 121, the network device 122, and the network device 123 in the embodiment shown in FIG. 1. The network device may be a device having a forwarding function, for example, a forwarding device such as a router (router), a switch (switch) or the like, or may be a device having a forwarding function such as a server, a terminal device, or the like.

Optionally, the device 111 and the device 112 may be the network device, or may be the terminal device. If either of the device 111 and the device 112 is the network device, the device may be a customer edge (Customer Edge, CE). The terminal device may be referred to as user equipment (User Equipment, UE), a mobile station (Mobile Station, MS), a mobile terminal (Mobile Terminal, MT), a terminal, or the like. The terminal device is a device that provides voice and/or data connectivity for a user, or a chip disposed in the device. For example, the terminal device may be a handheld device or a vehicle-mounted device that has a wireless connection function. The terminal device may be a mobile phone, a desktop computer, a tablet computer, a notebook computer, a palmtop computer, a mobile internet device (Mobile Internet Device, MID), a wearable device, a virtual reality (Virtual Reality, VR) device, an augmented reality (Augmented Reality, AR) device, a wireless terminal or a wired terminal in industrial control (Industrial Control), a wireless terminal in self driving (Self Driving), a wireless terminal in remote medical surgery (Remote Medical Surgery), a wireless terminal in a smart grid (Smart Grid), a wireless terminal in transportation safety (Transportation Safety), a wireless terminal in a smart city (Smart City), a wireless terminal in a smart home (Smart Home), a home gateway device supporting 5G access (5G--+Residential Gateway, 5G->RG), or the like.

In some possible implementations, the queue scheduling method provided in embodiments of this application may alternatively be performed by an access device. For example, the method may be performed by an access device having a BRAS function, and is used to schedule a packet that is received by the access device and that is from a terminal device.

FIG. 2 is a schematic flowchart of a queue scheduling method according to an embodiment of this application. The method specifically includes but is not limited to the following steps S201 to S203.

S201: A queue scheduling apparatus determines first bandwidth.

To flexibly adjust a total quantity of bytes of a packet that is dequeued in each time of scheduling, the queue scheduling apparatus first determines the first bandwidth. The queue scheduling apparatus is a module that is on a device having a queue scheduling function and that is configured to schedule to dequeue the packet, for example, may be a queue scheduling chip corresponding to an outbound interface on a network device. Alternatively, the queue scheduling apparatus may also be a software module, and is configured to schedule, in a software manner, to dequeue a packet stored in the queue. The first bandwidth indicates a rate at which a packet on the outbound interface is dequeued. The outbound interface is a network interface that is on the device having the queue scheduling function and that corresponds to the queue scheduling apparatus. The outbound interface corresponds to one or more queues.

For ease of description, the queue corresponding to the outbound interface is referred to as a first queue set. In other words, if the outbound interface corresponds to one queue, the first queue set includes one queue. If the outbound interface corresponds to a plurality of queues, the first queue set includes a plurality of queues. Correspondingly, the queue scheduling apparatus is configured to: schedule to dequeue a packet stored in each queue in the first queue set, and send the packet to a next-hop network device through the outbound interface. Correspondingly, "being dequeued" in embodiments of this application refers to being dequeued in the first queue set, and being sent to the next-hop network device through the outbound interface.

In this embodiment of this application, the first bandwidth may be enqueuing bandwidth of the outbound interface, or may be dequeuing bandwidth of the outbound interface. The following provides detailed descriptions separately.

Implementation 1: The first bandwidth is the enqueuing bandwidth of the outbound interface.

The enqueuing bandwidth of the outbound interface indicates bandwidth of a data flow that is added to the first queue set. Correspondingly, the first bandwidth is determined based on a total quantity of bytes of a packet that is added to the first queue set per unit of time. The queue scheduling apparatus may monitor a case that the packet is added to the queue, and record a quantity of bytes of each packet that is added to the queue and time at which the packet is added to the queue. In this way, when determining the first bandwidth, the queue scheduling apparatus determines, based on the time at which the packet is added to the queue and the quantity of bytes of the packet, the total quantity of bytes of the packet that is added to the queue per unit of time, to obtain the first bandwidth.

Optionally, the queue scheduling apparatus periodically determines whether the total quantity of bytes of the packet that is dequeued in each time of scheduling needs to be adjusted. Correspondingly, the queue scheduling apparatus may periodically determine the first bandwidth. A periodicity of the first bandwidth determined by the queue scheduling apparatus is referred to as an adjustment periodicity. In this case, the first bandwidth is determined based on a total quantity of bytes of a packet that is added to the queue in a previous adjustment periodicity and duration of the adjustment periodicity. The first bandwidth is average enqueuing bandwidth of the outbound interface in the previous adjustment periodicity. It may be understood that, in another possible implementation, the first bandwidth may alternatively be instant enqueuing bandwidth of the outbound interface.

Implementation 2: The first bandwidth is the dequeuing bandwidth of the outbound interface.

The dequeuing bandwidth of the outbound interface indicates bandwidth of a data flow sent to the next-hop network device through the outbound interface, namely, bandwidth corresponding to the packet that is dequeued. Correspondingly, the first bandwidth is determined based on a total quantity of bytes of a packet that is dequeued from the first queue set per unit of time. Specifically, the queue scheduling apparatus may monitor a case that the packet is dequeued from the first queue set, and record a quantity of bytes of each packet that is dequeued and time at which the packet is dequeued. In this way, when determining the first bandwidth, the queue scheduling apparatus determines, based on the time at which the packet is dequeued and the quantity of bytes of the packet, the total quantity of bytes of the packet that is dequeued per unit of time, to obtain the first bandwidth.

Similar to the foregoing first possible implementation, if the first bandwidth is the dequeuing bandwidth, the queue scheduling apparatus may also determine the first bandwidth based on an adjustment periodicity. In this case, the first bandwidth is determined based on a total quantity of bytes of a packet that is dequeued from the first queue set in a previous adjustment periodicity.

The first bandwidth may be calculated by the queue scheduling apparatus, or may be sent by another device to the queue scheduling apparatus. For example, if the queue scheduling apparatus is a module that is on the device having the queue scheduling function and that is configured to adjust a scheduling parameter, the first bandwidth may be sent by a scheduler module or a queue management module to the queue scheduling apparatus. For descriptions of the scheduling parameter, refer to the following descriptions. Details are not described herein.

S202: The queue scheduling apparatus determines a first scheduling parameter based on the first bandwidth and a first scheduling frequency.

After obtaining the first bandwidth, the queue scheduling apparatus determines the first scheduling parameter based on the first bandwidth and the first scheduling frequency. The first scheduling frequency indicates a maximum quantity of scheduling times per unit of time, and a first scheduling parameter indicates a length of the packet that is dequeued in each time of scheduling. In other words, the first scheduling frequency corresponds to the foregoing maximum quantity of scheduling times per unit of time, and the first scheduling parameter corresponds to the foregoing total quantity of bytes of the packet that is dequeued in each time of scheduling.

According to the foregoing descriptions, maximum bandwidth of a device is equal to a product of the maximum quantity of scheduling times per unit of time and the total quantity of bytes of the packet that is dequeued in each time of scheduling. Correspondingly, to ensure normal forwarding of a data flow, a product of the first scheduling frequency and the first scheduling parameter is not less than the first bandwidth. In other words, to ensure normal forwarding of the packet and reduce an impact on QoS of the next-hop network device, the queue scheduling apparatus determines, based on the first bandwidth and the first scheduling frequency, the first scheduling parameter that matches an actual traffic status of the outbound interface.

According to the foregoing descriptions, if the total quantity of bytes of the packet that is dequeued in each time of scheduling is large, traffic burst on the next-hop network device may be caused and the QoS of the next-hop network device may be affected. However, even if the total quantity of bytes of the packet that is dequeued is small, the maximum bandwidth supported by the outbound interface is limited, the packet that is forwarded normally may be affected. Therefore, the queue scheduling apparatus may increase a scheduling parameter corresponding to the outbound interface, or may reduce a scheduling parameter corresponding to the outbound interface. Correspondingly, before determining the first scheduling parameter based on the first bandwidth and the first scheduling frequency, the queue scheduling apparatus may first determine an adjustment direction of the scheduling parameter of the outbound interface.

In this embodiment of this application, the outbound interface may determine the adjustment direction of the scheduling parameter of the outbound interface based on a value relationship between the first bandwidth and second bandwidth. The second bandwidth is determined based on a second scheduling parameter and the first scheduling frequency. The second scheduling parameter is a length of the packet scheduled by the queue scheduling apparatus at a first moment each time. The first moment is a moment at which the queue scheduling apparatus obtains the first bandwidth. In other words, the second scheduling parameter is a scheduling parameter corresponding to the first bandwidth. If the queue scheduling apparatus determines the first bandwidth based on the adjustment periodicity, the second scheduling parameter is the total quantity of bytes of the packet that is dequeued by the queue scheduling apparatus in each time of scheduling in the adjustment periodicity corresponding to the first bandwidth. The second bandwidth may be equal to a product of the second scheduling parameter and the first scheduling frequency, or may be less than the product of the second scheduling parameter and the first scheduling frequency. For detailed descriptions of the second bandwidth, refer to the following descriptions. Details are not described herein.

By comparing the value relationship between the first bandwidth and the second bandwidth, the queue scheduling apparatus may determine that the first bandwidth is greater than or equal to the second bandwidth, or determine that the first bandwidth is less than the second bandwidth. The following uses an example in which the queue scheduling apparatus determines the first bandwidth based on the adjustment periodicity to separately describe an implementation in which the queue scheduling apparatus determines the first scheduling parameter when the first bandwidth is less than the second bandwidth and an implementation in which the queue scheduling apparatus determines the first scheduling parameter when the first bandwidth is greater than or equal to the second bandwidth.

Case 1: The first bandwidth is greater than or equal to the second bandwidth.

If the total quantity of bytes of the packet that is dequeued by the queue scheduling apparatus in the previous adjustment periodicity is greater than or equal to the second bandwidth determined based on the first scheduling frequency and the second scheduling parameter, it indicates that load of the queue scheduling apparatus in the previous adjustment periodicity is high. The queue scheduling apparatus may increase the scheduling parameter, to increase bandwidth of the outbound interface in a next adjustment periodicity.

If the second bandwidth is equal to the product of the second scheduling parameter and the first scheduling frequency, the second bandwidth indicates maximum bandwidth supported by the queue scheduling apparatus when the packet is scheduled to be dequeued based on the second scheduling parameter. Therefore, if the first bandwidth is greater than or equal to the second bandwidth, it indicates that a scheduling frequency of the queue scheduling apparatus in the previous adjustment periodicity reaches or is greater than the first scheduling frequency, and bandwidth of the outbound interface also reaches or is greater than the maximum bandwidth that can be reached based on the second scheduling parameter. In this case, if the packet stored in the first queue set is continuously scheduled to be dequeued based on the second scheduling parameter, the maximum bandwidth that can be provided by the queue scheduling apparatus may not meet a requirement for transmission of the data flow. Therefore, the queue scheduling apparatus determines that the scheduling parameter of the outbound interface needs to be increased, to ensure normal transmission of the packet.

It may be understood that, if the second bandwidth is equal to the product of the second scheduling parameter and the first scheduling frequency, and the first bandwidth is greater than the second bandwidth, the first bandwidth may be the enqueuing bandwidth of the outbound interface. The queue scheduling apparatus obtains the first bandwidth in Implementation 1.

It is considered that a network environment may be complex, a solution of increasing the scheduling parameter of the queue scheduling apparatus after the first bandwidth reaches the second bandwidth may have a specific delay, and a fluctuation status of the data flow cannot be matched in time. Therefore, in some possible implementations, the second bandwidth may be less than the product of the first scheduling frequency and the second scheduling parameter.

The second bandwidth may be adjusted by using a first preset proportion. To be specific, the second bandwidth is equal to a product of the second scheduling parameter, the first scheduling frequency, and the first preset proportion. The first preset proportion is a real number less than 1. In this case, the second bandwidth is equal to maximum bandwidth supported by the queue scheduling apparatus when the packet is scheduled to be dequeued based on the second scheduling parameter and normal transmission of the data flow is ensured.

In the foregoing implementation, the second bandwidth is enabled to be less than the product of the first scheduling frequency and the second scheduling parameter by using the first preset proportion. It may be understood that, in this embodiment of this application, the second bandwidth may be enabled to be less than the product of the first scheduling frequency and the second scheduling parameter in another manner. For example, in some other possible implementations, the second bandwidth may be obtained by using a bandwidth correction value. To be specific, a difference between the product of the first scheduling frequency and the second scheduling parameter and the bandwidth correction value is the second bandwidth.

In this way, if the first bandwidth is greater than or equal to the second bandwidth, it indicates that the bandwidth of the outbound interface already reaches the maximum bandwidth that can ensure normal transmission of the data flow based on the second scheduling parameter. In this case, if the packet stored in the first queue set is continuously scheduled to be dequeued based on the second scheduling parameter, the maximum bandwidth that can be provided by the queue scheduling apparatus may not meet a requirement for normal transmission of the data flow. Therefore, the queue scheduling apparatus determines that the scheduling parameter of the outbound interface needs to be increased, to ensure normal transmission of the packet.

After determining that the scheduling parameter of the outbound interface needs to be increased, the queue scheduling apparatus determines the first scheduling parameter that is greater than the second scheduling parameter. Correspondingly, because the first scheduling parameter is greater than the second scheduling parameter, the product of the first scheduling parameter and the first scheduling frequency is also greater than the product of the second scheduling parameter and the first scheduling frequency. In other words, maximum bandwidth supported by the queue scheduling apparatus when the packet is scheduled to be dequeued based on the first scheduling parameter is greater than the maximum bandwidth supported by the queue scheduling apparatus when the packet is scheduled to be dequeued based on the second scheduling parameter. In this way, the maximum bandwidth that can be provided by the queue scheduling apparatus is increased, and the requirement for normal transmission of the data flow can be met.

In this embodiment of this application, that the queue scheduling apparatus determines the first scheduling parameter includes but is not limited to the following two implementations.

Implementation 1: The queue scheduling apparatus determines the first scheduling parameter based on a ratio of the first bandwidth to the first scheduling frequency.

If the second bandwidth is equal to the product of the first scheduling frequency and the second scheduling parameter, and the first bandwidth is greater than the second bandwidth, the ratio of the first bandwidth to the first scheduling frequency is greater than the second scheduling parameter. The queue scheduling apparatus may determine the ratio of the first bandwidth to the first scheduling frequency as the first scheduling parameter. In this way, when the packet is scheduled to be dequeued based on the first scheduling parameter, the maximum bandwidth supported by the queue scheduling apparatus can reach the first bandwidth, and the requirement for transmission of the data flow can be met.

Alternatively, if the second bandwidth is equal to the product of the first scheduling frequency, the second scheduling parameter, and the first preset proportion, and the first bandwidth is greater than the second bandwidth, the queue scheduling apparatus may divide the first bandwidth by the second bandwidth, and determine a ratio of the obtained result to a ratio of the first preset proportion to the first scheduling frequency as the first scheduling parameter. In this way, because the first preset proportion is less than 1, the result obtained by dividing the first bandwidth by the first preset proportion is greater than the first bandwidth, and is also greater than the product of the first scheduling frequency and the second scheduling parameter. In other words, when the packet is scheduled to be dequeued based on the first scheduling parameter, the maximum bandwidth supported by the queue scheduling apparatus is greater than the first bandwidth, and normal transmission of the data flow can also be ensured.

Optionally, to ensure QoS of a network, after determining the first scheduling parameter based on the ratio of the first bandwidth to the first scheduling frequency, the queue scheduling apparatus may increase the first scheduling parameter based on a first preset value. For example, if the first scheduling parameter is not equal to the ratio of the first bandwidth to the first scheduling frequency, the queue scheduling apparatus may sum up the ratio of the first bandwidth to the first scheduling frequency with the first preset value, and determine a result obtained through the summing as the first scheduling parameter. In this way, when the packet is scheduled to be dequeued based on the first scheduling parameter, the maximum bandwidth supported by the queue scheduling apparatus is greater than the first bandwidth. Even if the data flow fluctuates in the next adjustment periodicity, the queue scheduling apparatus can meet the requirement for transmission of the data flow.

In an actual application scenario, the queue scheduling apparatus provided in this embodiment of this application is a scheduling chip on a network device. However, a data processing capability of the scheduling chip is limited, and may not be sufficient to meet a requirement for using the ratio of the first bandwidth to the first scheduling frequency as the first scheduling parameter to schedule the packet in the first queue set to be dequeued. Therefore, in some possible implementations, a first candidate scheduling parameter set may be set for the outbound interface. The first candidate scheduling parameter set includes a plurality of different first candidate scheduling parameters. When determining the first scheduling parameter, the queue scheduling apparatus may determine the first scheduling parameter from the plurality of first candidate scheduling parameters based on the first bandwidth and the first scheduling frequency.

Specifically, the queue scheduling apparatus first calculates the ratio of the first bandwidth to the first scheduling frequency. Then, the queue scheduling apparatus selects, from the first candidate scheduling parameter set corresponding to the outbound interface, a first candidate scheduling parameter greater than the ratio of the first bandwidth to the first scheduling frequency as the first scheduling parameter. For example, the queue scheduling apparatus may use a smallest first candidate scheduling parameter that is greater than the ratio of the first bandwidth to the first scheduling frequency and that is in the first candidate scheduling parameter set as the first scheduling parameter. This is equivalent to presetting scheduling parameters having a plurality of levels on the queue scheduling apparatus. When the scheduling parameter needs to be adjusted, the queue scheduling apparatus may determine a proper level based on the bandwidth and the first scheduling frequency. In this way, the scheduling parameter of the outbound interface can be flexibly adjusted, and a requirement for calculating resources of the queue scheduling apparatus can be reduced.

Optionally, the first bandwidth may be the enqueuing bandwidth of the outbound interface.

Implementation 2: The queue scheduling apparatus determines the first scheduling parameter based on the second scheduling parameter.

In the second possible implementation, the queue scheduling apparatus determines the first scheduling parameter based on the second scheduling parameter. For example, the queue scheduling apparatus may sum up the second scheduling parameter with a second preset value, and determine a result obtained through summing as the first scheduling parameter. Optionally, the second preset value may be equal to the first preset value. Alternatively, the queue scheduling apparatus may select, from a second candidate scheduling parameter set, a second candidate scheduling parameter greater than the second scheduling parameter as the first scheduling parameter. The second candidate scheduling parameter set includes a plurality of second candidate scheduling parameters. Optionally, the second candidate scheduling parameter set and the first candidate scheduling parameter set may be a same set.

Case 2: The first bandwidth is less than the second bandwidth.

If the total quantity of bytes of the packet that is dequeued by the queue scheduling apparatus in the previous adjustment periodicity is less than the second bandwidth determined based on the first scheduling frequency and the second scheduling parameter, it indicates that load of the queue scheduling apparatus in the previous adjustment periodicity is low. The queue scheduling apparatus may reduce the scheduling parameter, to reduce the total quantity of bytes of the packet that is dequeued in each time of scheduling, and reduce the impact on the QoS of the next-hop network device.

After determining that the scheduling parameter of the outbound interface needs to be reduced, the queue scheduling apparatus determines the first scheduling parameter that is less than the second scheduling parameter. In this embodiment of this application, that the queue scheduling apparatus determines the first scheduling parameter includes but is not limited to the following two implementations.

Implementation 1: The queue scheduling apparatus determines the first scheduling parameter based on a ratio of the first bandwidth to the first scheduling frequency.

Similar to Implementation 1 in Case 1, the queue scheduling apparatus may determine the first scheduling parameter based on the ratio of the first bandwidth to the first scheduling frequency. Because the first bandwidth is less than the second bandwidth, and the ratio of the first bandwidth to the first scheduling frequency is also less than a ratio of the second bandwidth to the first scheduling frequency, the first scheduling parameter is less than the second scheduling parameter. In this way, the scheduling parameter of the outbound interface is reduced, and the total quantity of bytes of the packet that is dequeued in each time of scheduling is reduced.

In some possible implementations, to avoid repeated adjustment, the queue scheduling apparatus may determine the first scheduling parameter based on the ratio of the first bandwidth to the first scheduling frequency and a scheduling parameter correction value. To be specific, the queue scheduling apparatus first calculates the ratio of the first bandwidth to the first scheduling frequency, then sums up the ratio with the correction value, and finally determines the first scheduling parameter based on a result obtained through summing. For example, the queue scheduling apparatus may determine the result obtained through summing as the correction value, or select, from a first candidate scheduling parameter set, a smallest first candidate scheduling parameter that is greater than the result obtained through summing as the first scheduling parameter.

It may be understood that, if the queue scheduling apparatus determines the first scheduling parameter based on the ratio of the first bandwidth to the first scheduling frequency, the first scheduling parameter may be equal to the second scheduling parameter. In this case, the queue scheduling apparatus may not adjust the scheduling parameter of the outbound interface.

Implementation 2: The queue scheduling apparatus determines the first scheduling parameter based on the second scheduling parameter.

Similar to Implementation 2 in Case 2, the queue scheduling apparatus may also determine the first scheduling parameter based on the second scheduling parameter. For example, the queue scheduling apparatus may determine a difference between the second scheduling parameter and a second preset value as the first scheduling parameter. Alternatively, the queue scheduling apparatus may select, from a third candidate scheduling parameter set, a largest third candidate scheduling parameter that is smaller than the first scheduling parameter as the first scheduling parameter. The third candidate scheduling parameter set includes a plurality of third candidate scheduling parameters. Optionally, the third candidate scheduling parameter set, the first candidate scheduling parameter set, and the second candidate scheduling parameter set may be a same set.

In the foregoing implementations, the queue scheduling apparatus determines, based on the second bandwidth, whether the scheduling parameter needs to be increased or the second scheduling parameter needs to be reduced. In other words, bandwidth for increasing the scheduling parameter is the same as bandwidth for decreasing the scheduling parameter. However, in some other possible implementations, bandwidth for increasing the scheduling parameter is different from bandwidth for decreasing the scheduling parameter. In other words, if the first bandwidth is greater than third bandwidth, the queue scheduling apparatus increases the scheduling parameter of the outbound interface. If the first bandwidth is less than fourth bandwidth, the queue scheduling apparatus reduces the scheduling parameter of the outbound interface. The third bandwidth is greater than the fourth bandwidth. Optionally, the third bandwidth and the fourth bandwidth are determined based on the second scheduling parameter and the first scheduling frequency. For example, the third bandwidth may be equal to the product of the second scheduling parameter, the first scheduling frequency, and the first preset proportion, and the fourth bandwidth may be equal to a product of the second scheduling parameter, the first scheduling frequency, and a second preset proportion. The first preset proportion is greater than the second preset proportion, and the first preset proportion is less than 1.

In the foregoing implementation, the queue scheduling apparatus determines the adjustment direction of the scheduling parameter by comparing the value relationship between the first bandwidth and the second bandwidth (or the third bandwidth or the fourth bandwidth). However, in some other possible implementations, the queue scheduling apparatus may determine the adjustment direction of the scheduling parameter by comparing a second scheduling frequency. The second scheduling frequency indicates an actual quantity of scheduling times of the queue scheduling apparatus per unit of time.

Specifically, the queue scheduling apparatus may compare a value relationship between the second scheduling frequency and a third scheduling frequency. The third scheduling frequency is determined based on the first scheduling frequency. For example, the third scheduling frequency may be equal to the first scheduling frequency, or may be equal to a difference between the first scheduling frequency and a frequency correction value.

It is assumed that the third scheduling frequency is equal to the difference between the first scheduling frequency and the frequency correction value, and the second scheduling frequency is greater than or equal to the third scheduling frequency. It indicates that a frequency at which the queue scheduling apparatus schedules to dequeue the packet is high. In this way, if traffic burst occurs, the queue scheduling apparatus may fail to provide sufficient bandwidth to schedule to dequeue the packet. Therefore, after determining that the second scheduling frequency is greater than or equal to the third scheduling frequency, the queue scheduling apparatus may determine that the scheduling parameter of the outbound interface needs to be increased. It may be understood that, the queue scheduling apparatus may also determine, in a similar manner, that the scheduling parameter of the outbound interface needs to be reduced.

In the foregoing implementations described above, the queue scheduling apparatus determines the first scheduling parameter based on the second bandwidth or a parameter related to the second bandwidth. In some other possible implementations, the queue scheduling apparatus may alternatively determine the first scheduling parameter based on the first bandwidth and the first scheduling frequency. For example, after obtaining the first bandwidth, the queue scheduling apparatus may calculate the ratio of the first bandwidth to the first scheduling frequency, and use a result obtained through calculation as the first scheduling parameter. In other words, the queue scheduling apparatus may directly determine the first scheduling parameter based on the ratio of the first bandwidth to the first scheduling frequency without comparing the first bandwidth with the second bandwidth.

S203: The queue scheduling apparatus schedules, based on the first scheduling parameter, to dequeue the packet on the outbound interface.

After determining the first scheduling parameter, the queue scheduling apparatus schedules, based on the first scheduling parameter, to dequeue the packet on the outbound interface. In other words, after the first scheduling parameter is determined, the total quantity of bytes of the packet that is dequeued by the queue scheduling apparatus in each time of scheduling is determined based on the first scheduling parameter.

It can be learned from the foregoing descriptions that, in this embodiment of this application, the queue scheduling apparatus first obtains the first bandwidth, then determines the first scheduling parameter based on the first bandwidth and the first scheduling frequency, and schedules, based on the first scheduling parameter, to dequeue the packet. In other words, the first scheduling parameter used by the queue to schedule to dequeue the packet is determined based on a rate at which the packet is actually added to (or dequeued from) the first queue set corresponding to the outbound interface. In this way, the scheduling parameter of the outbound interface can be flexibly adjusted based on the actual bandwidth of the outbound interface. If the bandwidth of the outbound interface is reduced, the queue scheduling apparatus may reduce the scheduling parameter of the outbound interface. The queue scheduling apparatus may dequeue a small quantity of packets in each time of scheduling, to reduce, in each time of scheduling, the total quantity of bytes of the packet sent to the next-hop network device corresponding to the outbound interface. In this case, the next-hop network device does not receive a packet that exceeds a processing capability of the next-hop network device in a short period of time. This avoids traffic burst and improves the QoS of the network system. If the bandwidth of the outbound interface is increased, the queue scheduling apparatus may increase the scheduling parameter of the outbound interface. In this case, the queue scheduling apparatus may dequeue more packets in each time of scheduling, to increase the maximum bandwidth of the outbound interface. It can be learned that the scheduling parameter is flexibly adjusted based on the actual bandwidth of the outbound interface, so that the scheduling parameter of the outbound interface matches actual traffic of the outbound interface. Therefore, on a premise that normal transmission of the data flow is ensured, the total quantity of bytes of the packet that is dequeued in each time of scheduling is reduced, and the QoS of the network can be better ensured.

The following further describes the queue scheduling method provided in embodiments of this application with reference to the application scenario shown in FIG. 1. For ease of description, in the following embodiment, a queue scheduling apparatus on a network device 122 performs, based on an adjustment periodicity, the queue scheduling method provided in embodiments of this application. First bandwidth is dequeuing bandwidth of an outbound interface. The queue scheduling apparatus determines an adjustment direction of a scheduling parameter based on second bandwidth. A first preset proportion is 80%. In addition, a first scheduling frequency corresponding to the queue scheduling apparatus is 2 MHz, maximum rated bandwidth is 200 MB/s, and a scheduling parameter correction value is 5 bytes.

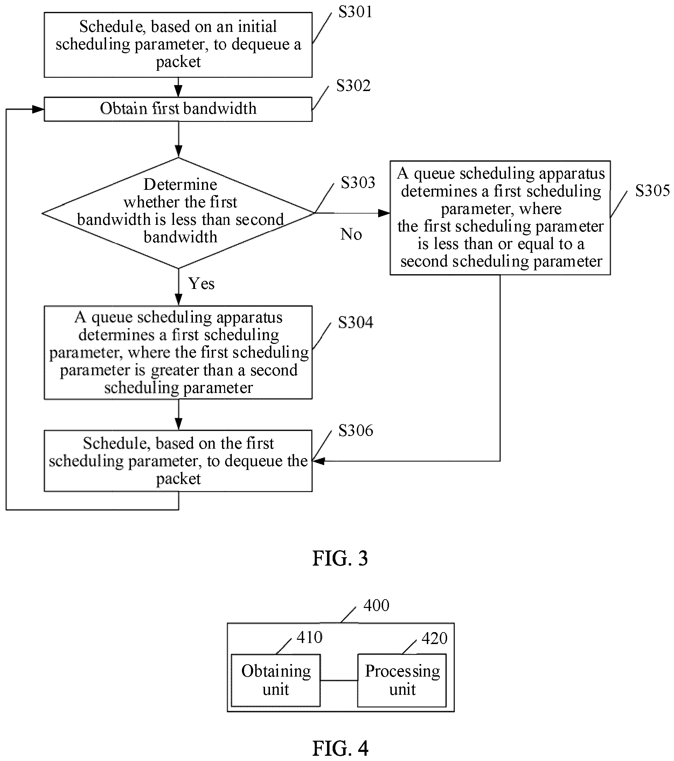

FIG. 3 is a method flowchart of a queue scheduling method according to an embodiment of this application. The method specifically includes but is not limited to the following steps S301 to S203.

S301: The queue scheduling apparatus schedules, based on an initial scheduling parameter, to dequeue a packet.

In the 1^{st} adjustment periodicity, the queue scheduling apparatus may schedule, based on the initial scheduling parameter, to dequeue the packet. The initial scheduling parameter may be a scheduling parameter configured on the queue scheduling apparatus. Optionally, the queue scheduling parameter may be a maximum scheduling parameter corresponding to the queue scheduling apparatus, for example, may be 100 bytes.

In other words, in the 1^{st} adjustment periodicity, the network device 122 sends a packet whose total length is 100 bytes to a network device 123 from the outbound interface A in each time of scheduling.

S302: The queue scheduling apparatus obtains the first bandwidth.

In a process in which the queue scheduling apparatus schedules to dequeue the packet, the queue scheduling apparatus may monitor a case that the packet is scheduled to be dequeued in a first queue set. After the current adjustment periodicity ends, the queue scheduling apparatus may determine the first bandwidth based on a total quantity of bytes of the packet that is scheduled to be dequeued in the current adjustment periodicity and duration of the adjustment periodicity.

S303: The queue scheduling apparatus determines whether the first bandwidth is less than the second bandwidth.

After determining the first bandwidth, the queue scheduling apparatus determines a value relationship between the first bandwidth and the second bandwidth, and determines whether the first bandwidth is less than the second bandwidth. If the first bandwidth is less than the second bandwidth, the queue scheduling apparatus performs S304. If the first bandwidth is greater than or equal to the second bandwidth, the queue scheduling apparatus performs S305.

S304: In response to that the first bandwidth is less than the second bandwidth, the queue scheduling apparatus determines a first scheduling parameter.

If the first bandwidth is less than the second bandwidth, the queue scheduling apparatus may calculate a ratio of the first bandwidth to a first scheduling frequency, and sum up the ratio with the correction value. Then, the queue scheduling apparatus selects, from a second candidate scheduling parameter set, a smallest second candidate scheduling parameter that is greater than a result obtained through summing as a first candidate scheduling parameter.

For example, it is assumed that a second scheduling parameter is 50 bytes, the first bandwidth is 30 MB/s, and the second candidate scheduling parameter set includes five second candidate scheduling parameters: 0 bytes, 25 bytes, 50 bytes, 75 bytes, and 100 bytes. Correspondingly, the second bandwidth corresponding to the second scheduling parameter is equal to (50 x 2) x 80% = 80 MB/s. Because the first bandwidth is less than the second bandwidth, the queue scheduling apparatus first calculates the ratio of the first bandwidth to the first scheduling frequency, and then sums up the ratio with the scheduling parameter correction value, and an obtained result is 30/2 + 5 = 20 bytes. Finally, a smallest second candidate scheduling parameter that is greater than 20 bytes, that is, 25 bytes, is selected from the five candidate scheduling parameters as the first scheduling parameter.

S305: In response to that the first bandwidth is greater than or equal to the second bandwidth, the queue scheduling apparatus determines a first scheduling parameter.

If the first bandwidth is greater than or equal to the second bandwidth, the queue scheduling apparatus selects, from a first candidate scheduling parameter set, a smallest first candidate scheduling parameter that is greater than a second scheduling parameter as the first scheduling parameter.

For example, it is assumed that the second scheduling parameter is 50 bytes, the first bandwidth is 90 MB/s, and the first candidate scheduling parameter set includes five candidate scheduling parameters: 0 bytes, 25 bytes, 50 bytes, 75 bytes, and 100 bytes. Correspondingly, the second bandwidth corresponding to the second scheduling parameter is equal to (50 x 2000000) x 80% = 80 MB/s. Because the first bandwidth is greater than the second bandwidth, the queue scheduling apparatus may select, from the first candidate scheduling parameter set, a smallest first candidate scheduling parameter that is greater than 50 bytes, that is, 75 bytes, as the first scheduling parameter.

S306: The queue scheduling apparatus schedules, based on the first scheduling parameter, to dequeue the packet.

After determining the first scheduling parameter, the queue scheduling apparatus schedules, in a next adjustment periodicity based on the first scheduling parameter, to dequeue the packet, and recollects statistics about the first bandwidth. When the "next adjustment periodicity" ends, the queue scheduling apparatus returns to perform S302 to S306.

For example, it is assumed that actual bandwidth of a data flow B sent by a device 111 to a device 112 is 142 MB/s. In addition, in an i^{th} (where i is a positive integer) adjustment periodicity, the queue scheduling apparatus dequeues a packet whose total length is not greater than 50 bytes in each time of scheduling, and a corresponding scheduling parameter is 50 bytes.

In the i^{th} adjustment periodicity, maximum bandwidth of the outbound interface A is 50 x 2 = 100 MB/s, which is lower than the actual bandwidth 142 MB/s of the data flow B. Therefore, first bandwidth in the i^{th} adjustment periodicity is the maximum bandwidth 100 MB/s supported by the outbound interface A. Because the first bandwidth 100 MB/s is greater than the second bandwidth 80 MB/s, the queue scheduling apparatus selects, from five candidate scheduling parameters: 0 bytes, 25 bytes, 50 bytes, 75 bytes, and 100 bytes, a candidate scheduling parameter greater than 50 bytes, as a scheduling parameter in an (i+1)^{th} adjustment periodicity. In this way, in the (i+1)^{th} adjustment periodicity, the queue scheduling apparatus dequeues a packet whose total length is not greater than 75 bytes in each time of scheduling, and a corresponding scheduling parameter is 75 bytes.

In the (i+1)^{th} adjustment periodicity, maximum bandwidth supported by the outbound interface A is 75 x 2 = 150 MB/s, and corresponding second bandwidth is 150 x 0.8 = 120 MB/s. Because the maximum bandwidth supported by the outbound interface A is greater than the actual bandwidth of the data flow B, first bandwidth in the (i+1)^{th} adjustment periodicity is the actual bandwidth 142 MB/s of the data flow B.

Because the first bandwidth is greater than the second bandwidth, the queue scheduling apparatus selects, from the five candidate scheduling parameters: 0 bytes, 25 bytes, 50 bytes, 75 bytes, and 100 bytes, a candidate scheduling parameter greater than 75 bytes as a scheduling parameter in an (i+2)^{th} adjustment periodicity. In this way, in the (i+2)^{th} adjustment periodicity, the queue scheduling apparatus dequeues a packet whose total length is not greater than 100 bytes in each time of scheduling, and a corresponding scheduling parameter is 100 bytes.

In the (i+2)^{th} adjustment periodicity, maximum bandwidth supported by the outbound interface A is 100 x 2 = 200 MB/s, and corresponding second bandwidth is 200 x 0.8 = 160 MB/s. Because the maximum bandwidth supported by the outbound interface A is greater than the actual bandwidth of the data flow B, first bandwidth in the (i+1)^{th} adjustment periodicity is the actual bandwidth 142 MB/s of the data flow B.

Because the first bandwidth is less than the second bandwidth, the queue scheduling apparatus divides the first bandwidth by the first scheduling frequency, and an obtained result is 142/2 = 71 bytes. Then, the queue scheduling apparatus sums up the obtained result with the correction value, and an obtained result is 71 + 5 = 76 bytes. Then, the queue scheduling apparatus selects, from the five candidate scheduling parameters: 0 bytes, 25 bytes, 50 bytes, 75 bytes, and 100 bytes, a candidate scheduling parameter greater than 76 bytes as a scheduling parameter in an (i+3)^{th} adjustment periodicity. In this way, in the (i+3)^{th} adjustment periodicity, the queue scheduling apparatus dequeues a packet whose total length is not greater than 100 bytes in each time of scheduling, and a corresponding scheduling parameter is 100 bytes.

It is assumed that, in the (i+3)^{th} adjustment periodicity, the actual bandwidth of the data flow B changes from 142 MB/s to 20 MB/s. In this case, first bandwidth is 20 MB/s and second bandwidth is 160 MB/s in the (i+4)^{th} adjustment periodicity. Because the first bandwidth is less than the second bandwidth, the queue scheduling apparatus divides the first bandwidth by the first scheduling frequency, and an obtained result is 20/2 = 10 bytes. Then, the queue scheduling apparatus sums up the obtained result with the correction value, and an obtained result is 10 + 5 = 15 bytes. Then, the queue scheduling apparatus selects, from the five candidate scheduling parameters: 0 bytes, 25 bytes, 50 bytes, 75 bytes, and 100 bytes, a candidate scheduling parameter greater than 15 bytes as a scheduling parameter in an (i+4)^{th} adjustment periodicity. In this way, in the (i+4)^{th} adjustment periodicity, the queue scheduling apparatus dequeues a packet whose total length is not greater than 25 bytes in each time of scheduling, and a corresponding scheduling parameter is 25 bytes.

It can be learned that, according to the queue scheduling method provided in this embodiment of this application, the queue scheduling apparatus can flexibly adjust the total quantity of bytes of the packet that is dequeued in each time of scheduling, so that the total quantity of bytes of the packet that is dequeued in each time of scheduling matches the actual bandwidth of the outbound interface. Therefore, on a premise that normal forwarding of the data flow is ensured, traffic burst on a next-hop network device (namely, the network device 123) is avoided, and QoS of a network system is improved.

Refer to FIG. 4. An embodiment of this application further provides a queue scheduling apparatus 400. The queue scheduling apparatus 400 may implement functions of the queue scheduling apparatus in the embodiment shown in FIG. 2 or FIG. 3. The queue scheduling apparatus 400 includes an obtaining unit 410 and a processing unit 420. The obtaining unit 410 is configured to implement S201 in the embodiment shown in FIG. 2, and the processing unit 420 is configured to implement S202 and S203 in the embodiment shown in FIG. 2.

Specifically, the obtaining unit 410 is configured to determine first bandwidth. The first bandwidth indicates a rate at which a packet on an outbound interface is dequeued.

The processing unit 402 is configured to: determine a first scheduling parameter based on the first bandwidth and a first scheduling frequency, where the first scheduling frequency indicates a maximum quantity of scheduling times per unit of time, and the first scheduling parameter indicates a length of a packet scheduled each time; and schedule, based on the first scheduling parameter, to dequeue the packet on the outbound interface.

For a specific execution process, refer to detailed descriptions of corresponding steps in the embodiment shown in FIG. 2 or FIG. 3. Details are not described herein again.

It should be noted that, in this embodiment of this application, division into the units is an example, and is merely logical function division. During actual implementation, another division manner may be used. Functional units in embodiments of this application may be integrated into one processing unit, or each of the units may exist alone physically, or two or more units may be integrated into one unit. For example, in the foregoing embodiment, a scheduling unit and a determining unit may be a same unit or different units. The integrated unit may be implemented in a form of hardware, or may be implemented in a form of a software functional unit.

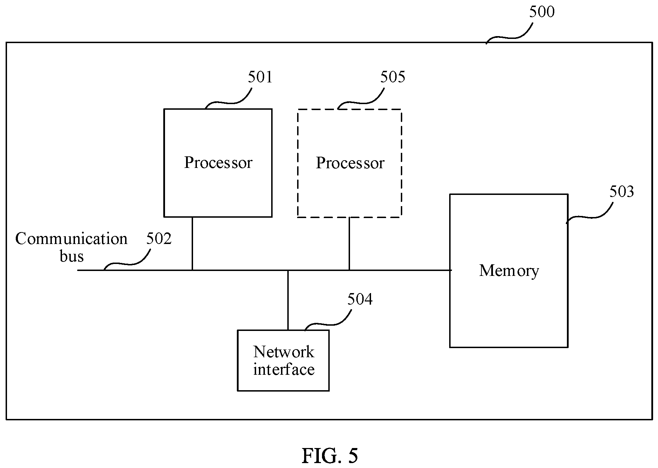

FIG. 5 is a schematic structural diagram of a device 500 according to an embodiment of this application. The foregoing queue scheduling apparatus 400 may be implemented via the device shown in FIG. 5. Refer to FIG. 5. The device 500 includes at least one processor 501, a communication bus 502, and at least one network interface 504. Optionally, the device 500 may further include a memory 503.

The processor 501 may be a general-purpose central processing unit (Central Processing Unit, CPU), an application-specific integrated circuit (Application-specific Integrated Circuit, ASIC), or one or more integrated circuits (Integrated Circuits, ICs) configured to control program execution of the solutions in this application. The processor may be configured to process a packet, a queue, and a scheduling parameter, to implement the queue scheduling method provided in embodiments of this application.

For example, when the queue scheduling apparatus in FIG. 2 is implemented via the device shown in FIG. 5, the processor may be configured to determine first bandwidth. The first bandwidth indicates a rate at which a packet on an outbound interface is dequeued. A processing unit is configured to: determine a first scheduling parameter based on the first bandwidth and a first scheduling frequency, where the first scheduling frequency indicates a maximum quantity of scheduling times per unit of time, and the first scheduling parameter indicates a length of a packet scheduled each time; and schedule, based on the first scheduling parameter, to dequeue the packet on the outbound interface.

The communication bus 502 is configured to transmit information among the processor 501, the network interface 504, and the memory 503.

The memory 503 may be a read-only memory (Read-only Memory, ROM) or another type of static storage device that can store static information and instructions. The memory 503 may alternatively be a random access memory (Random Access Memory, RAM) or another type of dynamic storage device that can store information and instructions, or may be a compact disc read-only memory (Compact Disc Read-only Memory, CD-ROM) or other optical disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 503 is not limited thereto. The memory 503 may exist independently, and is connected to the processor 501 through the communication bus 502. The memory 503 may alternatively be integrated with the processor 501.

Optionally, the memory 503 is configured to store program code or instructions for executing the technical solutions provided in embodiments of this application, and the execution is controlled by the processor 501. The processor 501 is configured to execute the program code or the instructions stored in the memory 503. The program code may include one or more software modules. Optionally, the processor 501 may alternatively store program code or instructions for executing the technical solutions provided in embodiments of this application. In this case, the processor 501 does not need to read the program code or the instructions from the memory 503.

The network interface 504 may be an apparatus such as a transceiver, and is configured to communicate with another device or a communication network. The communication network may be an Ethernet, a radio access network (RAN), a wireless local area network (Wireless Local Area Network, WLAN), or the like. In this embodiment of this application, the network interface 504 may be configured to receive a packet sent by another node in a segment routing network, or may send a packet to another node in a segment routing network. The network interface 504 may be an Ethernet (Ethernet) interface, a fast Ethernet (Fast Ethernet, FE) interface, a gigabit Ethernet (Gigabit Ethernet, GE) interface, or the like.

During specific implementation, in an embodiment, the device 500 may include a plurality of processors, for example, the processor 501 and a processor 505 shown in FIG. 5. Each of these processors may be a single-core (single-CPU) processor, or may be a multi-core (multi-CPU) processor. The processor herein may be one or more devices, circuits, and/or processing cores configured to process data (for example, computer program instructions).

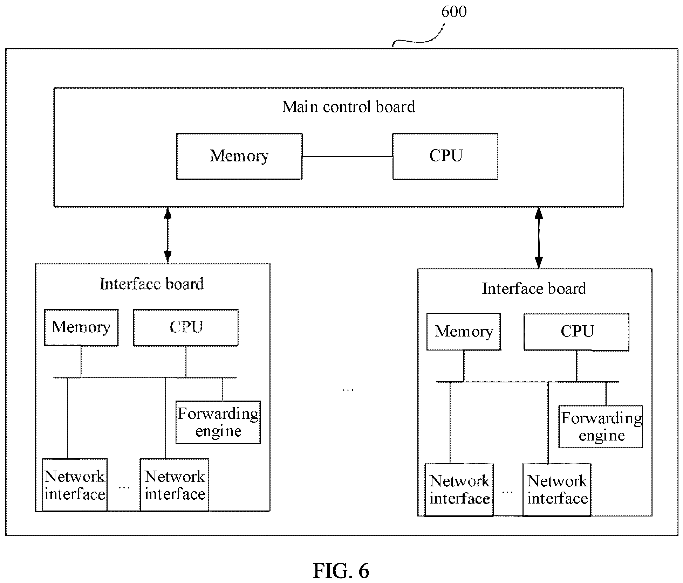

FIG. 6 is a schematic structural diagram of a device 600 according to an embodiment of this application. The queue scheduling apparatus in FIG. 2 or FIG. 3 may be implemented via the device shown in FIG. 6. Refer to the schematic structural diagram of the device shown in FIG. 6. The device 600 includes a main control board and one or more interface boards. The main control board communicates with the interface board. The main control board is also referred to as a main processing unit (Main Processing Unit, MPU) or a route processor card (Route Processor Card). The main control board includes a CPU and a memory, and is responsible for controlling and managing each component in the device 600, including route computation, and device management and maintenance functions. The interface board is also referred to as a line processing unit (Line Processing Unit, LPU) or a line card (Line Card), and is configured to receive and send a packet. In some embodiments, the main control board communicates with the interface board or the interface board communicates with the interface board through a bus. In some embodiments, the interface boards communicate with each other by using a switching board. In this case, the device 600 also includes the switching board. The switching board is communicatively connected to the main control board and the interface board. The switching board is configured to forward data between the interface boards. The switching board may also be referred to as a switch fabric unit (Switch Fabric Unit, SFU). The interface board includes a CPU, a memory, a forwarding engine, and an interface card (Interface Card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding table. The forwarding engine is configured to: forward a received packet based on the forwarding table stored in the memory. If a destination address of the received packet is an IP address of the device 600, the forwarding engine sends the packet to the CPU of the main control board or the interface board for processing. If a destination address of the received packet is not an IP address of the device 600, the forwarding engine searches the forwarding table based on the destination address. If a next hop and an outbound interface that correspond to the destination address are found from the forwarding table, the forwarding engine forwards the packet to the outbound interface corresponding to the destination address. The forwarding engine may be a network processor (Network Processor, NP). The interface card, also referred to as a subcard, may be installed on the interface board, and is responsible for converting an optical/electrical signal into a data frame, performing validity check on the data frame, and forwarding the data frame to the forwarding engine or the CPU of the interface board for processing. In some embodiments, the CPU may also perform a function of the forwarding engine, for example, implement software forwarding based on a general-purpose CPU. Therefore, interface board does not need the forwarding engine. In some embodiments, the forwarding engine may be implemented by using an ASIC or a field programmable gate array (Field Programmable Gate Array, FPGA). In some embodiments, the memory storing the forwarding table may alternatively be integrated into the forwarding engine, and is used as a part of the forwarding engine.

An embodiment of this application further provides a chip system, including a processor. The processor is coupled to a memory, and the memory is configured to store a program or instructions. When the program or the instructions are executed by the processor, the chip system is enabled to implement the queue scheduling method performed by the queue scheduling apparatus in the embodiment shown in FIG. 2 or FIG. 3.

Optionally, there may be one or more processors in the chip system. The processor may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be an FPGA, an ASIC, a system on chip (System on Chip, SoC), a CPU, an NP, a digital signal processing circuit (Digital Signal Processor, DSP), a micro controller unit (Micro Controller Unit, MCU), a programmable logic device (Programmable Logic Device, PLD), or another integrated chip.

It should be understood that, steps in the foregoing method embodiments can be implemented by using a hardware integrated logic circuit or instructions in a form of software in the processor. The steps of the methods disclosed with reference to embodiments of this application may be directly performed and completed by a hardware processor, or may be performed and completed by using a combination of hardware and software modules in the processor.

An embodiment of this application further provides a computer-readable storage medium, including instructions. When the instructions are run on a computer, the computer is enabled to perform the queue scheduling method that is provided in the foregoing method embodiments and that is performed by a queue scheduling apparatus.

An embodiment of this application further provides a computer program product including instructions. When the instructions are run on a computer, the computer is enabled to perform the queue scheduling method that is provided in the foregoing method embodiments and that is performed by a queue scheduling apparatus.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, terms "include" and "have" and any other variants are intended to cover the non-exclusive inclusion. For example, a process, method, system, product, or device including a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical module division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form, a mechanical form, or another form.

The units described as separate parts may or may not be physically separate, and the parts displayed as units may or may not be physical units, in other words, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units may be integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, an optical disc, or the like.

A person skilled in the art should be aware that, in the foregoing one or more examples, the functions described in the present invention may be implemented by hardware, software, firmware, or any combination thereof. When the functions are implemented by the software, the functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a general-purpose or special-purpose computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, a person of ordinary skill in the art should understand that the technical solutions described in the foregoing embodiments may still be modified, or some technical features thereof may be equivalently replaced. These modifications or replacements do not make the essence of the corresponding technical solutions fall outside the scope of the technical solutions of the embodiments of this application.

## Claims

1. A queue scheduling method, wherein the method comprises:
determining, by a queue scheduling apparatus, first bandwidth, wherein the first bandwidth indicates a rate at which a packet on an outbound interface is dequeued;
determining, by the queue scheduling apparatus, a first scheduling parameter based on the first bandwidth and a first scheduling frequency, wherein the first scheduling frequency indicates a maximum quantity of scheduling times per unit of time, and the first scheduling parameter indicates a length of a packet scheduled each time; and
scheduling, by the queue scheduling apparatus based on the first scheduling parameter, to dequeue the packet on the outbound interface.

2. The method according to claim 1, wherein before the determining a first scheduling parameter, the method further comprises:
determining, by the queue scheduling apparatus, that the first bandwidth matches second bandwidth, wherein the second bandwidth is determined based on a second scheduling parameter and the first scheduling frequency, the second scheduling parameter is a length of a packet scheduled by the queue scheduling apparatus at a first moment each time, and the first moment is a moment at which the queue scheduling apparatus obtains the first bandwidth.

3. The method according to claim 2, wherein the determining, by the queue scheduling apparatus, a first scheduling parameter based on the first bandwidth and a first scheduling frequency comprises:
in response to that the first bandwidth is less than the second bandwidth, determining, by the queue scheduling apparatus, the first scheduling parameter based on a ratio of the first bandwidth to the first scheduling frequency, wherein the first scheduling parameter is less than the second scheduling parameter.

4. The method according to claim 3, wherein the determining, by the queue scheduling apparatus, the first scheduling parameter based on a ratio of the first bandwidth to the first scheduling frequency comprises:
determining, by the queue scheduling apparatus, a third scheduling parameter based on the ratio of the first bandwidth to the first scheduling frequency; and
determining, by the queue scheduling apparatus, the first scheduling parameter from a first candidate scheduling parameter set based on the third scheduling parameter, wherein the first candidate scheduling parameter set comprises a plurality of first candidate scheduling parameters, and the first scheduling parameter is a first candidate scheduling parameter that is in the first candidate scheduling parameter set and that is not less than the third scheduling parameter.

5. The method according to any one of claims 1 to 4, wherein the first bandwidth is determined based on a length of the packet that is on the outbound interface and that is scheduled to be dequeued, or the first bandwidth is determined based on a length of a packet that is added to a first queue set, wherein the first queue set corresponds to the outbound interface.

6. The method according to claim 2, wherein the first bandwidth is determined based on a length of the packet that is on the outbound interface and that is scheduled to be dequeued, and the determining, by the queue scheduling apparatus, a first scheduling parameter based on the first bandwidth and a first scheduling frequency comprises:
in response to that the first bandwidth is not less than the second bandwidth, determining, by the queue scheduling apparatus, the first scheduling parameter based on the second scheduling parameter, wherein the first scheduling parameter is greater than the second scheduling parameter.

7. The method according to claim 6, wherein the determining, by the queue scheduling apparatus, the first scheduling parameter based on the second scheduling parameter comprises:
determining, by the queue scheduling apparatus, the first scheduling parameter from a second candidate scheduling parameter set based on the second scheduling parameter, wherein the second candidate scheduling parameter set comprises a plurality of second candidate scheduling parameters, and the first scheduling parameter is a second candidate scheduling parameter that is in the second candidate scheduling parameter set and that is not less than the second scheduling parameter.

8. The method according to claim 6, wherein the determining, by the queue scheduling apparatus, the first scheduling parameter based on the second scheduling parameter comprises:
determining, by the queue scheduling apparatus, the first scheduling parameter based on a sum of the second scheduling parameter and a preset step.

9. The method according to claim 2, wherein the first bandwidth is determined based on a length of a packet that is added to a first queue set, wherein the first queue set corresponds to the outbound interface, and the determining, by the queue scheduling apparatus, a first scheduling parameter based on the first bandwidth and a first scheduling frequency comprises:
in response to that the first bandwidth is not less than the second bandwidth, determining, by the queue scheduling apparatus, the first scheduling parameter based on a ratio of the first bandwidth to the first scheduling frequency.

10. The method according to any one of claims 6 to 9, wherein the determining, by the queue scheduling apparatus, that the first bandwidth matches second bandwidth comprises:
determining, by the queue scheduling apparatus, that a second scheduling frequency is not less than a third scheduling frequency, wherein the second scheduling frequency indicates an actual quantity of scheduling times of the queue scheduling apparatus per unit of time, and the third scheduling frequency is determined based on the first scheduling frequency.

11. A queue scheduling apparatus, wherein the apparatus comprises:
an obtaining unit, configured to determine first bandwidth, wherein the first bandwidth indicates a rate at which a packet on an outbound interface is dequeued; and
a processing unit, configured to: determine a first scheduling parameter based on the first bandwidth and a first scheduling frequency, wherein the first scheduling frequency indicates a maximum quantity of scheduling times per unit of time, and the first scheduling parameter indicates a length of a packet scheduled each time; and schedule, based on the first scheduling parameter, to dequeue the packet on the outbound interface.

12. The apparatus according to claim 11, wherein
the processing unit is specifically configured to determine that the first bandwidth matches second bandwidth, wherein the second bandwidth is determined based on a second scheduling parameter and the first scheduling frequency, the second scheduling parameter is a length of a packet scheduled by the queue scheduling apparatus at a first moment each time, and the first moment is a moment at which the queue scheduling apparatus obtains the first bandwidth.

13. The apparatus according to claim 12, wherein
the processing unit is specifically configured to: in response to that the first bandwidth is less than the second bandwidth, determine the first scheduling parameter based on a ratio of the first bandwidth to the first scheduling frequency, wherein the first scheduling parameter is less than the second scheduling parameter.

14. The apparatus according to claim 13, wherein
the processing unit is specifically configured to: determine a third scheduling parameter based on the ratio of the first bandwidth to the first scheduling frequency; and determine the first scheduling parameter from a first candidate scheduling parameter set based on the third scheduling parameter, wherein the first candidate scheduling parameter set comprises a plurality of first candidate scheduling parameters, and the first scheduling parameter is a first candidate scheduling parameter that is in the first candidate scheduling parameter set and that is not less than the third scheduling parameter.

15. The apparatus according to any one of claims 11 to 14, wherein the first bandwidth is determined based on a length of the packet that is on the outbound interface and that is scheduled to be dequeued, or the first bandwidth is determined based on a length of a packet that is added to a first queue set, wherein the first queue set corresponds to the outbound interface.

16. The apparatus according to claim 12, wherein
the processing unit is specifically configured to: in response to that the first bandwidth is not less than the second bandwidth, determine the first scheduling parameter based on the second scheduling parameter, wherein the first scheduling parameter is greater than the second scheduling parameter.

17. The apparatus according to claim 16, wherein
the processing unit is specifically configured to determine the first scheduling parameter from a second candidate scheduling parameter set based on the second scheduling parameter, wherein the second candidate scheduling parameter set comprises a plurality of second candidate scheduling parameters, and the first scheduling parameter is a second candidate scheduling parameter that is in the second candidate scheduling parameter set and that is not less than the second scheduling parameter.

18. The apparatus according to claim 16, wherein
the processing unit is specifically configured to determine the first scheduling parameter based on a sum of the third scheduling parameter and a preset step.

19. The apparatus according to claim 12, wherein the first bandwidth is determined based on a length of a packet that is added to a first queue set, and the first queue set corresponds to the outbound interface; and
the processing unit is specifically configured to: in response to that the first bandwidth is not less than the second bandwidth, determine the first scheduling parameter based on a ratio of the first bandwidth to the first scheduling frequency.

20. The apparatus according to any one of claims 16 to 19, wherein
the processing unit is specifically configured to determine that a second scheduling frequency is not less than a third scheduling frequency, wherein the second scheduling frequency indicates an actual quantity of scheduling times of the queue scheduling apparatus per unit of time, and the third scheduling frequency is determined based on the first scheduling frequency.

21. A first device, wherein the first device comprises a processor and a memory, wherein the memory is configured to store instructions or program code, and the processor is configured to invoke the instructions or the program code from the memory and run the instructions or the program code, to perform the queue scheduling method according to any one of claims 1 to 10.

22. A chip, comprising a memory and a processor, wherein the memory is configured to store instructions or program code, and the processor is configured to invoke the instructions or the program code from the memory and run the instructions or the program code, to perform the queue scheduling method according to any one of claims 1 to 10.

23. A computer-readable storage medium, comprising instructions, a program, or code, wherein when the instructions, the program, or the code is executed on a computer, the computer is enabled to perform the method according to any one of claims 1 to 10.
